(19) Europäisches Patentamt
European Patent Office
Office européen des brevets

(11) **EP 3 486 227 A1**

(12) **EUROPEAN PATENT APPLICATION**

(43) Date of publication:
**22.05.2019 Bulletin 2019/21**

(51) Int Cl.:
***C04B 41/45*** (2006.01)     ***C04B 41/52*** (2006.01)

(21) Application number: **17382785.8**

(22) Date of filing: **20.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Cosentino Research and Development, S.L**
**04850 Cantoria (Almería) (ES)**

(72) Inventors:
• **POZAS BRAVO, Raúl**
  **04621 Vera (Almería) (ES)**

• **AYUSO SÁNCHEZ, Mª Jesús**
  **04005 Almería (ES)**
• **ROJAS RAMOS, Domingo Jesús**
  **04662 Huércal-Overa (Almería) (ES)**
• **RUEDA BELMONTE, Francisco José**
  **04008 Almería (ES)**
• **MARTÍNEZ FENOY, Rubén**
  **04880 Tíjola (Almería) (ES)**

(74) Representative: **Balder IP Law, S.L.**
**Paseo de la Castellana 93**
**5ª planta**
**28046 Madrid (ES)**

(54) **PROCESS FOR THE FUNCTIONALIZATION OF NATURAL OR ARTIFICIAL STONE**

(57)     The present invention refers to a method for manufacturing an artificial or a natural stone comprising (i) subjecting an artificial or a natural stone to a roughening procedure to produce a roughened artificial or natural stone having a controlled roughness; and (ii) adding to said roughened artificial or natural stone one or more functionalization agents. The invention also discloses the artificial or natural stone obtainable by said method, and objects thereof.

Figure 1

**Description**

**Field of the Invention**

The present invention relates to a process for the functionalization of natural or artificial stone that provides new functionalization and design possibilities. The present invention further refers to the natural or artificial stone so obtained.

**Background of the Invention**

The field of stone manufacturing is always seeking to provide materials with improved properties. The industry is constantly seeking to improve the methods to functionalize artificial or natural stone. In KR20010037019 a process is disclosed for patterning the surface of a stone following a silk screen printing technique wherein a specific type of ink is used. According to the authors, durable patterning is obtained by a combination of the specific process steps taken and the composition of the ink. Following the usual understanding in the field, the stone is polished prior to applying the specific ink of the authors' design. Then, the stone is subjected to a preheating process and then to a heating process at higher temperature, so that the organic solvent contained in the printing ink is volatilized. Since said ink has been designed to have an appropriate viscosity, the pre-heating process allows penetration through the pores of the stone, and it is absorbed. According to the authors, when cooled to room temperature, the dyes and resins in the printing ink solidify to a depth of about 0.5 to 2 mm from the surface of the stone to the inside. Thus, KR20010037019 relies on a very specific ink composition and process steps to pattern the stone. The problem of providing a method for printing on the surface of a stone, particularly if the surface has been polished or it has an inherent low porosity, is a general problem of functionalization found in the art.

More general methods are required for patterning artificial or natural stones or to improve their mechanical or chemical properties, and in general to apply functionalization agents with durable results. Thus, it is an object of the present invention to provide an improved method for the treatment of artificial or natural stone, and to enhance durably the properties by functionalization of the artificial or natural stones so obtained, and to increase the versatility of the functionalization realizable of artificial and natural stones.

**Brief Description of the Invention**

The inventors have solved the problems of previous disclosures by providing a method for the functionalization of the surface of an artificial or a natural stone. The method of the invention opens the door to the durable functionalization of stones and the introduction of aesthetic effects previously not possible.

Thus, a first aspect of the invention is a method (method of the invention) for manufacturing an artificial or a natural stone comprising:

(i) subjecting an artificial or a natural stone to a roughening procedure to produce a roughened artificial or natural stone having a controlled roughness; and

(ii) adding to said roughened artificial or natural stone one or more functionalization agents.

Further aspects of the invention are:

- An artificial or a natural stone obtainable by the method of the invention.

- An object made of said natural or artificial stone.

- A method for recycling an artificial or a natural stone comprising:

(i) subjecting an artificial or a natural stone to a roughening procedure to produce a roughened artificial or natural stone having a controlled roughness; and

(ii) adding to said roughened artificial or natural stone one or more functionalization agents.

Particularly for the case of polished materials, or natural stone materials having inherently low porosity, functionalization of the surface is limited due to the shallowness, the small size (small diameter) and reduced number of the cavities in the surface of polished artificial or natural stone materials. The functionalization agents that can be applied durably to such materials are limited mostly to soluble molecular systems that are often unstable, and which do not allow localization of the functionalization molecules in a narrow area of the substrate (to improve inkjet definition, for instance). If the functionalization is applied superficially over those low porosity or polished stone materials, and it does not penetrate sufficiently in the pores, the functionality is quickly lost due to use (e.g. as countertop or floor covering). This is particularly the case of functionalization of stone surfaces by inkjet (inkjet has typically large particle size). This sets a technological barrier to the functionalization that can be induced in artificial or natural stone.

The invention provides a highly versatile method for functionalizing artificial or natural stone. By providing a stone having a controlled roughness, that is, having a controlled number and size of cavities on the surface, defined for example by certain Ra and Rz ranges, the surface of the stone can accommodate durably a larger variety of functionalization agents, which due to their nature (e.g. large particles), would otherwise not be suitable for durable functionalization of polished or low porosity surfaces. Further, the process of the invention has the surprising effect of being able to provide, in certain embodiments, a material that is more durable than the original stone, while incorporating the functionalization and/or the aesthetic effects. The roughening process creates cavities where the functionalization agent can deposit and be surprisingly protected from external attacks. Another surprising finding is that the resulting stone is in fact more resistant to chemical or mechanical abrasion than before roughening and functionalization. In particular embodiments of the invention, the resulting stone can be made also more resistant to scratches. All this while providing the possibility of new durable functionalization and aesthetic possibilities.

Although each of the individual steps are known, the use of a roughening step prior to functionalization has never been described to the best of our knowledge. For example, US 6,678,879 discloses a method to improve the anti-slipperiness of floor coverings comprising the formation of a plurality of micro-craters on the surface thereof by means of a pulsed laser beam. The micro-craters have a suction effect that improves the anti-slip properties of the floor covering. US 6,599,461 provides a further improved method wherein, in addition to the pulsed laser bombardment, the fine stoneware is treated with diluted acid to increase the size of the micro-craters, achieving in this way improved anti-slipperiness. However, neither document suggest a functionalization step. EP 3 093 279 A1 discloses a coating agent comprising polyorganosiloxane, a silane coupling agent having an epoxy functionality, colloidal silica, phosphoric acid and a catalyst. This coating agent is applied over a stone and grinded to a roughness Rmax of 0.8 or less. In order to increase the permeability of the coating agent, the stone is previously roughened by diamond grinding. EP 3 093 279 A1, however does not disclose or suggest, nor it is even concerned with functionalizing the stone after being roughened. WO 00/47427 discloses a process for the treatment of artificial stone, consisting of a "decapitation" (brushing) step to obtain a uniform surface, followed by brushing to obtain slight depressions corresponding to the resin. According to the applicant, this provides aesthetic advantages, and also improved resistance to mechanical and thermal wear, because the selective wear of the resin causes the harder and more durable stone filler to be more exposed. WO 00/47427 does not suggest however that the product can be further functionalized, or that the depressions can protect functionalization agents.

## Brief description of the figures

Figure 1: schematic representation of the method of the invention (steps (i) and (ii)).
Figure 2: schematic representation of an optional method further including a coating step (iii) and a polishing step (iv).

## Detailed Description of the Invention

In the present invention "stone" is understood as artificial or natural stones. Artificial stone includes composites comprising grounded stone and organic or inorganic binders, as well as stoneware, fine stoneware or ceramics, preferably composites. There are many methods in the art disclosing the manufacturing of artificial stone products. For example, the skilled person can refer to one of the many patent documents such as EP 2 944 443 or EP1 878 712 for the preparation of artificial stone composites. Typically, manufacturing artificial stone composites (e.g. tiles, slabs, boards, furniture) comprises crushing filler materials (e.g. grounded stone) with different granulometries, followed by mixing with a binder (organic resin or inorganic binder). The mixture thus obtained is homogenized and cured (polymerization), a process that many times requires heat or UV. Prior to curing it can be necessary to compact the mixture. Once the material has been hardened, it is submitted to cutting and polishing. Different binders are used in the industry, for example, unsaturated polyester resins or thermosetting resins such as methacrylate resins, epoxy resins, unsaturated polyester resins, or vinyl resins. The materials used as fillers vary. Just to mention a few examples, the filler can be one or more selected from the group consisting of feldspars, porphyries, granites, syenites, bentonites, basalts, nephelines, carbonates, clays, silicates, boron salts, sands, kaolins, talcs, alumina, glass materials, recycled glass, recycled porcelains, recycled stoneware, uncooked remainders of the process itself and mixtures thereof. The granulometry can also be chosen by the skilled person and, for example, the average particle diameter can be less than 9 mm, and can include a mixture of granulometries to produce specific aesthetic effects or obtain the mechanical properties required for a given application. The mixture of the filler and the binder typically includes further additives, such as a curing catalyst, colouring agents (e.g. inks, pigments), or anti-UV agents.

Artificial stones within the scope of the invention, include highly compacted materials of low porosity obtained by sintering ceramic materials (clays, feldspars, kaolins), such as those disclosed in the patent application EP 2889437 A1 or those commercialized by Cosentino under the trademark Dekton®.

Natural stone according to the present invention also includes all natural occurring stones, including, for example, granite, limestone, sandstone or marbles. The process of the invention can generate on the natural stone different properties of high interest without changing their intrinsic characteristics. Such new properties can be, for example, high resistance to stains and chemical degradation (especially interesting in marble, limestone and sandstones), durable inkjet decoration on natural stone (e.g. granite) surfaces for the recovery and revaluation of low quality or stock material, or the development of antimicrobial properties of natural stone surfaces.

The process of the invention is particularly suitable for the functionalization of stone material with a surface of low porosity (e.g. polished), or for materials having intrinsically a low porosity.

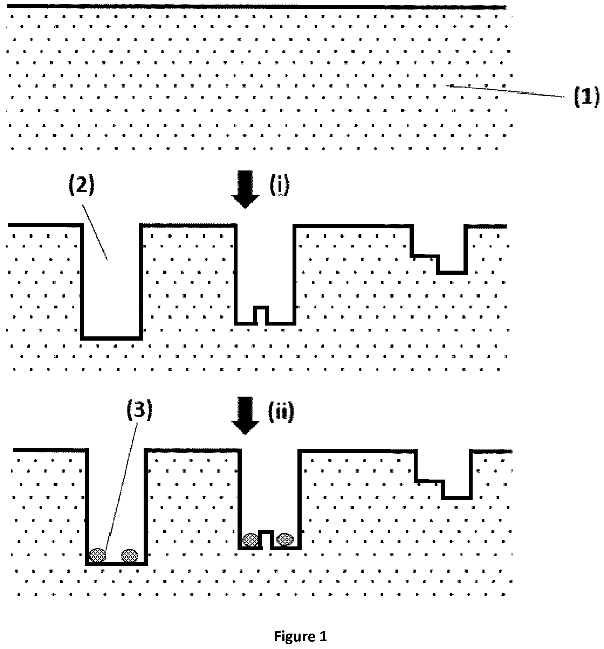

The process of the invention can be described with reference to figure 1. An artificial or a natural stone (1) is submitted to a roughening step (i), which creates a controlled roughness (i.e. cavities (2)), where one or more functionalization agents (3) can be deposited.

The present invention provides stones with a functionalization and/or aesthetic appearance for applications previously having performance issues. For example, the new materials are sufficiently durable for their use as countertops or worktops (e.g. for the kitchen) while having long lasting functionalizations or aesthetic effects not previously possible. Thus, the present invention provides articles comprising the stone of the invention, for example, an article selected from the group consisting of a worktop or countertop, a sink, a washbasin, a shower tray, a cladding element (for cladding exterior or interior walls), and a floor (either tiles or single piece). The new articles can be used in all kinds of environments, such as kitchens, bathrooms, hospitals, laboratories, residential buildings, public buildings or offices, just to mention a few examples.

Roughening step

Many roughening methods are known in the field of stone manufacturing, and the skilled person can choose the one which is most appropriate to suit specific means within the scope of the present invention. The object of the roughening step in the present invention is to provide the cavities which will later accommodate the functionalization agent. Commonly exemplary techniques used are mechanical roughening by abrasion (e.g. sand blasting, water jet, grinding pads, or other types of mechanical blasting or abrasion), laser blasting, or chemical etching. The roughening step removes the materials from the surface of the stone in a controlled way, resulting in reproducible values of Ra and Rz.

In the present invention laser blasting (e.g. pulsed laser bombardment) can be used because it provides an excellent control of the degree and the profile of the roughening. Laser blasting is known in the art and is described, for example, in US 6,599,461 and US 6,678,879. It is also possible, and even more preferred, to use superficial treatment by water jet or surface abrasion by grinding pads provided with diamond particles.

It is preferred that the roughened stone after step (i) has a Ra comprised between 1 micron and 20 microns, for example, between 2 microns and 15 microns or between 3 microns and 10 microns or between 3 microns and 8 microns or between 2 microns and 9 microns. The specific value of Ra can be tuned in view of the specific stone used and the characteristics of the functionalization agent used in step (ii).

Also, in the present invention, it is preferred that the roughened stone after step (i) has an Rz comprised between 5 microns and 200 microns, for example, between 8 microns and 150 microns or between 10 microns and 100 microns or between 10 microns and 50 microns or between 8 microns and 45 microns. The specific value of Rz can be tuned in view of the specific stone used and the characteristics of the functionalization agent used in step (ii).

For example, the roughened stone after step (i) can have an Rz comprised between 8 microns and 150 microns and a Ra between 3 microns and 10 microns, for example an Rz comprised between 10 microns and 50 microns and a Ra between 2 microns and 9 microns.

Ra in the present invention is the arithmetical mean deviation of the assessed profile, that is, the average length between the peaks and valleys and the deviation from the mean line on the entire surface within the sampling length. Ra averages all peaks and valleys of the roughness profile and then neutralizes the few outlying points so that the extreme points have no significant impact on the final results. The average length between the peaks and valleys and the deviation from the mean line on the entire surface within the sampling length is thus calculated by the formula (1)

$$Ra = \frac{1}{n}\sum_{i=1}^{n}|y_i|$$

(1)

wherein n is the number of i measurements, and $y_i$ is the deviation from the mean line of any i peak or valley. Thus, Ra is a measurement of roughness which takes into account the arithmetic mean of deviations measured over the sampled length.

On the other hand, Rz as calculated in the present invention is the mean roughness depth representing the mean value of the 10 Rzi values from 10 samplings, wherein each Rzi is the difference between highest peak and lowest valley in the sampling's length. This can be represented by the following formula (2):

$$Rz = \frac{1}{10}\sum_{i=1}^{10} Rpi - Rvi$$

 wherein Rpi is the highest peak in the sampling's length, and Rvi is the lowest valley within the same sampling length.

In both cases Ra and Rz are measured according to ISO 4287:1997. The measurement of Ra and Rz can be performed with a Surface Roughness Tester SJ-210 from Mitutoyo, coupled with a SJ-communication-tools software for storing roughness profiles. Other surface roughness testing machines are available in the market that provide equivalent results under the method according to ISO 4287:1997.

Functionalization

The second step of the process described herein is the functionalization of the roughened surface. The functionalization agent is selectively deposited in the cavities left after the roughening procedure. As a result, the functionalization agent is surprisingly protected when deposited in the cavities left between the harder particles after the roughening procedure without the need of providing for a coating. The skilled person can use the functionalization agents commonly used in the art. Functionalization agents are generally known, for example from "Functional Coatings", V. Stenzel, N. Rehfeld, 2011, Vicentz; or "Radiation Curing", P. Glockner, T. Jung, S. Struck, K. Studer. Some exemplary functionalization agents are selected from the group consisting of pigments, interferential effect materials, UV filters, materials that provide electrical or thermal properties and mixtures thereof. Examples of heat, light and weathering resistance enhancers are Dynamix Black 30C933 (manganese ferrite) from Shepherd, Sicopal Black L 0095 (Iron/chromium oxide complex) from BASF. Examples of pigments include Colormatch DAB-30455 (blend of blue pigment with amine-functional resins) from Cromaflo Tech., or Colanyl Oxide Blue COG 100 from Clariant (inorganic pigment), Lumina Royal Magenta EH 5001 (mica) from BASF or Hostatint Trans Oxide Red A-G 100 VP 15622 (iron oxide red) from Clariant. Starlight FX 15 (silver coated glass flakes) from Clariant, or Shinestar R100 (calcium aluminum borosilicated coated with silver) from ABC Nanotech can be used, for instance, to produce metallic or glitter effects on the functionalized surface. Exemplary functionalization agents to improve thermal and/or thermal conductivity of the surface are Graphistrength C100 (multi-wall carbon nanotubes) from Arkema, Texaquart 253 (organic salt of quaternary ammonium hydroxide) from BASF, or BYK-ES 80 (alkylolammonium salt of unsaturated acidic carboxylic acid ester) from Byk. As light stabilizers and/or UV absorbers, Lowlite 20 (2-hydroxxy-4-methoxybenzophenone) from Addivant or Hostavin 3041 dispersion (benzophenone aqueous dispersion) from Clariant are envisaged.

The controlled roughening step in the process of the invention provides an artificial or natural stone with a cavity size adequate to accommodate the particle size of functionalization agent. For example, the Ra value (in microns) of the stone after the roughening step (i) is at least 2 times the D50 value of the particles of the functionalization agent (in microns) applied in step (ii), for example at least 3 times the D50 value, for example between 80 and 5 times, for example between 70 and 10 times. It is also preferred that the Rz value (in microns) of the stone after the roughening step (i) is at least 10 times the D50 value of the particles of the functionalization agent (in microns) applied in step (ii), for example at least 20 times the D50 value, for example between 400 and 20 times, for example between 350 and 25 times. In an alternative example the Ra value (in microns) of the stone after the roughening step (i) is between 70 and 2 times the D50 value of the particles of the functionalization agent (in microns), and the Rz is between 350 and 25 times the D50 value of the particles of the functionalization agent (in microns).

Exemplary pigments can be chosen from standard pigmented functionalization agents or from UV curing inks, typically having a particle size D50 of less than 1 micron. Further, the process of the invention has even allowed the inventors to apply inkjet, previously unsuitable for use with the required functionalization durability in artificial or natural stones. The inkjet, preferably, UV curable, can be applied using available printing techniques and equipment, allowing the inventors and unprecedented flexibility by decorating only selected areas of the surface (or the whole surface if desired). In addition, inkjet printing provides a fully digital method for decorating and thus full automatization and access to aesthetic effects previously unavailable. Known inkjets can be used in the process of the invention, and typically have a particle size D50 comprised between 0.01 microns and 1 micron, for example, a particle size D50 comprised between 0.03 microns and 0.8 microns, preferably, between 0.05 microns and 0.5 microns. Preferably, the particle size D99 is comprised between 0.1 microns and 2 microns, for example between 0.2 microns and 1.3 microns, preferably between 0.25microns and 0.9 microns.

For the purposes of the present invention the particle size D50 represents the diameter at which at least 50% of the particle mass has a diameter below the number given. That is, the D50 is the diameter at which 50% of a sample's mass is comprised of smaller particles. Analogously, D99 is the diameter at which 99% of a sample's mass is comprised of smaller particles

Thus, for example, the process of the invention can comprise (i) subjecting an artificial or a natural stone to a roughening procedure to produce a roughened artificial or natural stone having an Ra comprised between 1 microns and 20 microns and an Rz comprised between 10 microns and 100 microns; and (ii) printing said roughened artificial or natural stone with inkjet. Optionally, the resulting stone from step (ii) can be coated and polished following the procedures disclosed below.

Another exemplary process of the invention can comprise (i) subjecting an artificial or a natural stone to a roughening procedure using a laser beam to produce a roughened artificial or natural stone having an Ra comprised between 1 microns and 20 microns, preferably between 10 microns and 100 microns, and an Rz comprised between 10 microns and 100 microns; and (ii) printing said roughened artificial or natural stone with an inkjet comprising pigments, wherein the Rz value (in microns) of the stone after the roughening step (i) is between 20 and 400, preferably between 350 and 25, times the D50 value of the particles of the inkjet. Optionally, the resulting stone from step (ii) can be coated and polished following the procedures disclosed below.

Another exemplary process of the invention can comprise (i) subjecting an artificial or a natural stone to a roughening procedure using a laser beam to produce a roughened artificial or natural stone having an Ra comprised between 2 microns and 15 microns, preferably between 2 microns and 9 microns, and an Rz comprised between 10 microns and 50 microns; and (ii) printing said roughened artificial or natural stone with an inkjet comprising pigments having a particle size D50 comprised between 0.05 microns and 0.5 microns and a particle size D99 comprised between 0.2 microns and 1.3 microns. Optionally, the resulting stone from step (ii) can be coated and polished following the procedures disclosed below.

In an embodiment of the invention, the stone is an artificial stone. Thus, another exemplary process of the invention can comprise (i) subjecting an artificial stone to a roughening procedure to produce a roughened artificial stone having a controlled roughness; and (ii) printing said roughened artificial stone with inkjet. Optionally, the resulting stone from step (ii) can be coated and optionally polished following the procedures disclosed below.

Another exemplary process of the invention can comprise (i) subjecting an artificial stone to a roughening procedure to produce a roughened artificial stone having an Ra comprised between 3 microns and 10 microns and an Rz comprised between 10 microns and 50 microns; and (ii) printing said roughened artificial stone with inkjet. Optionally, the resulting stone from step (ii) can be coated and polished following the procedures disclosed below.

In an embodiment of the invention, the stone is a natural stone. Thus, another exemplary process of the invention can comprise (i) subjecting a natural stone to a roughening procedure to produce a roughened natural stone having a controlled roughness; and (ii) printing said roughened natural stone with inkjet. Optionally, the resulting stone from step (ii) can be coated and polished following the procedures disclosed below.

Another exemplary process of the invention can comprise (i) subjecting a natural stone to a roughening procedure to produce a roughened natural stone having an Ra comprised between 3 microns and 10 microns and an Rz comprised between 10 microns and 50 microns; and (ii) printing said roughened natural stone with inkjet. Optionally, the resulting stone from step (ii) can be coated and polished following the procedures disclosed below.

If necessary, lacquers can be used to disperse the pigments, which is especially suitable were the pigment has an average particle size comprised between 5 microns and 300 microns. Use of lacquers typically involves dispersion in an organic UV or thermal curing vehicle and spray-deposition on the surface for the generation of different optical effects. Said deposition can be done over the full surface or only over part of the surface.

UV filters, for example, those based on $TiO_2$ or ZnO (with a thickness typically of less than 2-3 micrometers), can also be applied using similar techniques to provide the artificial or natural stone with high UV resistance for use in outdoor environments.

The artificial or natural stone can also be functionalized with electrical and thermal semiconductors, for example graphene, carbon nanotubes and nanofibers, ITO, ZnO doped, semiconductive polymers such a PEDOT:PPS, ITO-

coated TiO$_2$ fibers, silicon nitride, or metallic silicon. The combination with a semiconductive coating can provide properties to the material of interest for different applications such as electrically dissipative flooring, touch screens, solar panels, or Smart Surfaces.

By using the method of the invention, the inventors can impart new functionalities and aesthetic qualities to artificial or natural stones which would have otherwise been discarded in the manufacturing process. Thus, the method of the invention can be used for recycling artificial or natural stones.

Coating Step

On the other hand, the invention may include a coating step (iii), which provides additional protection to the roughened surface, and can even incorporate new functionalities and/or aesthetic effects. For this purpose, a homogeneous deposition can be applied over the entire surface or only parts thereof by means of, for example, wet transparent coatings. In a preferred embodiment, the thickness of the coating is such that the coating also covers the harder parts which had not been affected by the roughening process. As explained bellow, after curing (e.g. via IR, thermal, UV or EB radiation), the coating can be polished up to a level were the harder parts are again exposed.

There are different coating agents that can be used to coat the material after roughening. They are typically applied as an aqueous suspension. The coating agent typically has a concentration comprised between 60 and 90 % weight of total solution weight. The amount added is preferably just sufficient to cover the functionalized surface. If, alternatively, the coating is added in significant excess and a relative thick layer over the functionalized surface is obtained, an additional polishing step can be made. For example, an organosilane or siloxane solution having a concentration between 60 and 90 % weight of the total solution weight, can be added in amounts ranging from 10 to 100 g/m$^2$. The amount of organosilane or siloxane coating agent necessary can be adjusted, for example, to minimize the thickness to the coating so as to facilitate later polishing or even dispense with this additional step. Thus, for example, the thickness of the coating can be comprised between 0 microns and 1,000 microns as measured from the surface of the stone. If the thickness is 0 microns the coating is added in the amount necessary to cover the cavities, without allowing the coating to raise above the surface of the stone. In an alternative embodiment, the thickness of the coating is comprised between 5 microns and 500 microns.

For the coating of the roughened and functionalized artificial or natural stone, different types of coatings are available to the skilled person. For the purposes of the present invention, two types of coatings are particularly suitable. A first type is a polyacrylic UV curing coating modified with ceramic particles of high hardness and comprising the following components:

1. A main component which forms the base of these coatings is one or more polyacrylic UV curing oligomers. Said oligomers are typically substituted with functionalized monomers that allow modulation of the properties of the final product according to needs of each case. Said monomers can be selected from the group consisting acrylate-urethane, epoxy-acrylate, polyester-acrylate, polyether-acrylate, water-based polyacrylic resins and mixtures thereof. Particular examples are 2-propenoic acid and hexamethylene diacrylate.

2. Optionally, one or more photoinitiators for UV curing reaction. For example, 2-benzoil-2-propanol.

3. Optionally, one or more ceramic particles. Their mean diameter can be adjusted, and it is typically comprised between 2 and 500 micrometers. The skilled person can choose from a wide range of ceramics that can be, for example, selected from the group consisting of alumina, zirconia, quartz, silica and mixtures thereof. These particles are also provided in different presentations, for example, in powder or dispersion, generating different types of hybrid structures. These particles may in turn be chemically modified at the surface with functional groups capable of chemically coupling to the polyacrylic structure so as to increase the solids content of the protective structure.

4. Optionally, one or more coupling agents that reinforce the association of the particles present in the coating and the polyacrylic groups.

5. Optionally, one or more fluorinated components to improve the hydrophobic properties and the generation of oleophobic properties. It can be selected from the group consisting of the family of a fluoroalkylsilanes, acrylic fluoropolymers and mixtures thereof.

6. Optionally, one or more additives, for example, for leveling the coating, deaeration or wetting of the particles.

7. Optionally, one or more organic solvents such as, for example, ethanol, isopropanol, ethyl acetate or n-butyl acetate. Solvents are typically used to control the rheology, the process of penetration of the formulation into surface cavities and/or the evaporation at the beginning of the condensation reactions.

Examples of suitable commercial polyacrylic UV curing coating are Ebecryl 8603 and Ebecryl 225 from Allnex.

A second type of exemplary coatings according to the present invention are silica-based coatings (e.g. organosilane or siloxane polymers and polymer precursors thereof) which are preferably waterborne. Said silica-like coatings have an inorganic skeleton having the structure - O - Si - O - Si - O, and are typically modified with different functional organic groups that modulate their properties. They are normally obtained by the sol-gel process from the hydrolysis and condensation of silicon alkoxides and/or alkylsiloxanes. The components of said silica-based coatings preferably comprise:

a. One or more resins based on $SiO_2$-network and/or organically modified $SiO_2$-network that are partially condensed in a controlled manner, and stabilized in a liquid medium. The curing process of these resins involves an inorganic crosslinking by condensation reactions, and the generation of a $SiO_2$ (glass) network.

b. Optionally, one or more silicon alkoxide and/or alkylsiloxanes (e.g. methyl triethoxysilane and octyl triethoxysilane) which by hydrolysis and condensation generate a organic-inorganic hybrid structure.

c. Optionally, one or more particles selected from the group consisting of alumina, zirconia, quartz, silica and mixtures thereof. These particles are also provided in different presentations, for example, in powder or dispersion, generating different types of hybrid structures. These particles may in turn be chemically modified at the surface with functional groups capable of being chemically coupled to the $SiO_2$-structure to increase the solids content of the protective structure.

d. Optionally, nanoparticles and microparticles of high hardness of type $SiO_2$, $Al_2O_3$ or $ZrO_2$ with or without additional surface functionalization, which will be added especially when it is intended to regenerate surface structures of greater roughness, such as the surface of the calibrated stone agglomerate.

e. Optionally, one or more fluorinated components to improve the hydrophobic properties and the generation of oleophobic properties. It can be selected from the group consisting of the family of a fluoroalkylsilanes, acrylic fluoropolymers and mixtures thereof.

f. Optionally, one or more reaction catalyst.

g. Optionally, one or more UV Photoinitiators, if any of the components are UV reactive.

h. Optionally, one or more organic solvents such as, for example, ethanol, isopropanol, ethyl acetate or n-butyl acetate. Solvents are typically used to control the rheology, the process of penetration of the formulation into surface defects and/or the evaporation at the beginning of the condensation reactions.

Examples of suitable commercial silica-based resins are SiliXan M150 or SiliXan T600 from the company SiliXan GmbH.

According to an embodiment of the invention, the coating also comprises a functionalization agent. Said functionalization agent can be the same or different from the one used in step (ii). If the coating includes a different functionalization agent from the one used in step (ii), the artificial or natural stone can combine different functionalizations and aesthetic effects. Functionalization agents that can be added as part of the coating are, for example:

- Functionalization agents that impart super-hydrophobic or superhydrophilic properties to obtain ease of cleaning and self-cleaning.

- Functionalization agents that impart insulating-dissipative properties or electrical semiconductivity for the generation of antistatic properties (for example, in flooring materials).

- Functionalization agents that impart thermal conductivity to improve thermal resistance of the material.

- Functionalization agents that impart surface antimicrobial properties.

- Pigments, specially pigments having large particle size, for example, having a mean particle size comprised between 1 microns and 500 microns.

Thus, for example, the process of the invention can comprise (i) subjecting an artificial or a natural stone to a roughening procedure to produce a roughened artificial or natural stone having an Ra comprised between 1 microns and 20 microns and an Rz comprised between 10 microns and 100 microns; (ii) printing said roughened artificial or natural stone with inkjet; and (iii) coating the stone resulting from step (ii) with a coating agent comprising a functionalization agent different from a the functionalization agent used in step (ii), for example a pigment. Optionally, the resulting stone from step (iii) can be polished following the procedures disclosed below.

Another exemplary process of the invention can comprise (i) subjecting an artificial or a natural stone to a roughening procedure using a laser to produce a roughened artificial or natural stone having a controlled roughness; (ii) printing said roughened artificial or natural stone with inkjet; and (iii) coating the stone resulting from step (ii) with a polyacrylic UV curing coating modified with ceramic particles. Optionally, the resulting stone from step (iii) can be polished following the procedures disclosed below.

Another exemplary process of the invention can comprise (i) subjecting an artificial or a natural stone to a roughening procedure using a laser to produce a roughened artificial or natural stone having a controlled roughness; (ii) printing said roughened artificial or natural stone with inkjet; and (iii) coating the stone resulting from step (ii) with a polyacrylic UV curing coating modified with ceramic particles comprising a functionalization agent different from a the functionalization agent used in step (ii), for example a pigment. Optionally, the resulting stone from step (iii) can be polished following the procedures disclosed below.

Once the coating agent has been applied, it is cured, if required. Said curing requires the usual techniques known to the skilled person and depend on the nature of the coating agent: UV curing, heating, catalytic hardening, just to mention some examples.

Polishing

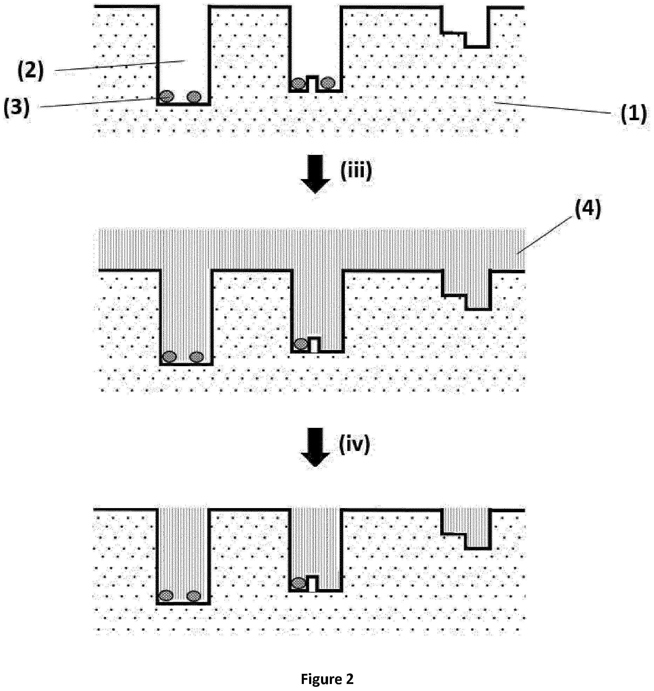

The coated artificial or natural stone can be polished to generate improved gloss and flatness on the final surface. For polishing, the skilled person can choose different combinations of abrasives. The properties of the final product can be tuned by use of different sequences of abrasives, for example, sequences of resins based on diamond-type resin having different grain sizes. It is preferred that the surface of the stone is polished up to a level were the harder particles of the stone, previously exposed in the roughening step, are again exposed by removal of the coating. This can be visualized in Figure 2, were the roughened and functionalized stone resulting from step (ii) is coated in a further step (iii) to create the coating (4). This coating (4) covers the cavities and also extends above the surface of the stone. According to this preferred embodiment, the polishing removes the coating (4) above the surface without further removing material from the stone (1), revealing the surface of the stone (1) and keeping the coating within the cavities (2). In alternative embodiments, the polishing might also remove partially the "heads" of the harder parts, without eroding the material to the full depth of cavities. Either way, the coating in the cavities and the harder parts together form a flat and smooth surface, wherein the harder parts provide both, the mechanical strength (high resistance to abrasion and to scratch), depth of color and characteristic naturalness of the material, and the required protection of the functionalization agents which results in a high durability of the properties which they impart, and make the artificial or natural stone so obtained suitable for the most demanding applications without interfering with the other properties of the material. All this, together with the high degree of chemical adhesion, compactness, chemical resistance and hydrophobic character obtained, increase the brightness and intensity of the color, the resistance to stains, and facilitate the cleaning of the surface by reducing the energy with which the liquid substances interact with the surface.

**Examples**

**Example 1: White Zeus artificial stone with Calacatta design**

Commercially available White Zeus Silestone® from Cosentino® was used for the examples. This artificial stone material is composed of around 80-90 % quartz/cristobalite particles, together with 10-20% cured unsaturated polyester resin, and about 1-2 % of white pigment ($TiO_2$)

In a first trial, White Zeus Silestone polished slab was mechanically roughened with abrading pads to an Ra of 7 microns and an irregularity in 10 points (Rz) of 37 microns. The roughness characteristics of the surface are summarized in Table 1 below.

Table 1

|  | Ra (microns) | Rq (microns) | Rz (microns) | Rt (microns) | Rp (microns) |
|---|---|---|---|---|---|
| Polished initial slab | 0.17 | 0.22 | 1.60 | 2.38 | 0.42 |

(continued)

| | Ra (microns) | Rq (microns) | Rz (microns) | Rt (microns) | Rp (microns) |
|---|---|---|---|---|---|
| Slab after roughening | 6.89 | 8.44 | 37.09 | 54.58 | 19.06 |

The roughened surface was submitted to inkjet to produce on the surface a Calacatta marble design of veins. CMYK standard inkjet ink was used in an ink-jet printer of UV curing EFI of the single-pass type printer model GS 3.1.

The pigments used in the ink have a D50 comprised between 0.120 microns and 0.260 microns and a D99 comprised between 260 nm and 840 nm, that is, the Ra value in microns (6.89) of the roughened stone is between approximately 57 times and 26 times the D50 value of the particles of the pigments used, and the Rz value in microns (37.09) of the roughened stone is between approximately 309 times and 143 times the D50 value of the particles of the pigments used.

After printing, the slab was coated with a coating composition comprising:

100 parts of Allnex Ebecryl 8603 binder. Comprises acrylic resin oligomers (20-50%), photoinitiator 2-benzoil-2-propanol (5-10%) and functional monomers (acrylic acid, pentaerythritol, and hexamethylene diacrylate) (40-70%).

10 parts of Allnex 225 Ebecryl cobinder. Comprises highly functionalized oligomers from reaction of acrylic acid and dipentaerythritol (DPHA).

3.5 parts of Alumina-21

1.5 parts of Alumina 1/5

2 parts of memosilane (3-methacryloxypropyl-trimethoxysilane)

0.6 parts of BYK-1790

The above coating composition was wet applied over the printed slab using an ELCOMETER 4340/MOD.M10 to a thickness of 200 microns (200-250 g/m$^2$). The resulting surface was pre-dried at 60°C for 15 minutes; this step favors elimination of craters on the surface. The slab was then cured in a UV tunnel at a conveyor belt speed of 3.5-4 m/min using a UV radiation of 2-3 J/cm$^2$ by use of a mercury lamp. In a final step the surface was polished according to the protocol summarized in Table 2. The sequence went stepwise, with increasing grain size, starting with the P1 head and finishing with P8 head.

Table 2

| Head | Speed = 1,2 m/min; P = 1.5 bar | Grain |
|---|---|---|
| P1 | Diamond abrasive 140/ FL30B G.800 (Sigmadiamant) | 800 |
| P2 | Diamond abrasive 140/ FL30B G.800 (Sigmadiamant) | 800 |
| P3 | Diamond abrasive 140/ LUX G.1000 (Sigmadiamant) | 1000 |
| P4 | Diamond abrasive 140/ LUX G.1000 (Sigmadiamant) | 1000 |
| P5 | Diamond abrasive 140/ LUX G.1200 (Sigmadiamant) | 1200 |
| P6 | Diamond abrasive 140/ LUX G.1800 (Sigmadiamant) | 1800 |
| P7 | Diamond abrasive 140/ LUX G.3500 (Sigmadiamant) | 3500 |
| P8 | Diamond abrasive 140/ LUX G.6000 (Sigmadiamant) | 6000 |

The above process provided a surface with physico-chemical characteristics (visual and touch feel, the resistance to scratch, the abrasion resistance, thermal resistance) similar to those of the White Zeus Silestone® slab used as starting material.

The inkjet Calacatta pattern proved to be highly durable to mechanical stresses, and resisted the routinely conducted abrasion quality testing without being deteriorated.

Additionally, it resulted in a surprising improvement of

- Brightness from 50° to 60°

- Resistance to stains, both from water and oil

- Very high water drain capacity; a significant improvement in hydrophobicity: contact angle increased from 40° to 70°.

**Example 2: application of a coating with additional aesthetic effects**

Over different samples of the ink-jet printed slab obtained in Example 1 the following coating composition were applied instead of the UV curing acrylic coating (the thickness of the coating is given in parenthesis), following otherwise the same procedure:

Sample 1: Mearlin® Super Gold 2303Z coating from BASF (6-48 microns)

Sample 2: Geopearl Copper coating from Geotech Int. (10-60 microns).

Sample 3: Moonshine® Brazen Blue Sparkle coating from Glassflake Ltd (Nominal thickness 1.0 microns).

All Samples 1, 2 and 3 displayed metal effects in different tones, while preserving a very high optical transparency allowing to visualize the ink-jet previously applied. This is groundbreaking feature, opening the door to combining ink-jet decoration with effect pigments.

**Example 3: application of the invention over natural stone**

The process of Example 1 was applied over a polished surface of white macael marble slab (natural stone). The resulting surface displayed a long-lasting inkjet durability and a surprisingly high chemical resistance. Concentrated HCI was applied over the surface, which after 1 hour did not show any sign of deterioration.

**Example 4: granite printing**

The process of Example 1 was applied over a polished natural granite slab. As a result, a natural granite slab durably decorated by ink-jet technique was obtained, that at the same time maintained the intrinsic characteristics of the original material.

**Example 5: Laser generated roughness**

A White Zeus Silestone® slab was treated with a $CO_2$ laser to roughness profile like that of Example 1. The slab was then printed in the same way as in Example 1 with similar results. This is a very interesting result because, unlike other roughening techniques, laser allows a greater control over the area that it is treated, providing an additional control to the method of the invention.

**Claims**

1. A method for manufacturing an artificial or a natural stone comprising:

   (i) subjecting an artificial or a natural stone to a roughening procedure to produce a roughened artificial or natural stone having a controlled roughness; and
   (ii) adding to said roughened artificial or natural stone one or more functionalization agents.

2. The method according to claim 1, comprising a coating step (iii) of the artificial or natural stone obtained after step (ii).

3. The method according to claim 2, wherein said coating comprises a coating agent selected from the group consisting of an organosilane, a siloxane or mixtures thereof.

4. The method according to any of claims 2 or 3, wherein said coating comprises one or more functionalization agents.

5. The method according to claim 4, wherein said one or more functionalization agents added in step (iii) are different from the one or more functionalization agents added in step (ii).

6.  The method according to any of claims 2 to 5, wherein the stone resulting from step (iii) is polished in a step (iv).

7.  The method according to any of the previous claims, wherein the roughening comprises roughening by mechanical abrasion, such as diamond loaded abrading pads.

8.  The method according to any of the previous claims, wherein the Ra of the roughened artificial or natural stone resulting from step (i) presents a Ra comprised between 1 micron and 20 microns.

9.  The method according to any of the previous claims, wherein the functionalization agent is selected from the group consisting of an ink, pigment, heat/light resistance enhancers, interferential effect agents, enhancers of electrical or thermal conductivity, anti-UV agent and UV-light absorbers.

10. The method according to claim 1, comprising (i) subjecting an artificial or a natural stone to a roughening procedure to produce a roughened artificial or natural stone having an Ra comprised between 3 microns and 10 microns and an Rz comprised between 10 microns and 50 microns; and (ii) printing said roughened artificial or natural stone with inkjet.

11. The method according to claim 10, wherein the stone obtained after step (ii) is coated and then polished.

12. The method according to any of the previous claims, wherein the Rz value in microns of the stone surface after the roughening step (i) is between 350 and 25 times the D50 value of the particles of the functionalization agent in microns applied in step (ii).

13. An artificial or a natural stone obtainable by the process defined in any of the previous claims.

14. An object made of the natural or artificial stone defined in claim 13.

15. A method for recycling an artificial or a natural stone comprising:

    (i) subjecting an artificial or a natural stone to a roughening procedure to produce a roughened artificial or natural stone having a controlled roughness; and
    (ii) adding to said roughened artificial or natural stone one or more functionalization agents.

**Figure 1**

**(2)**

**(3)**

**(1)**

**(iii)**

**(4)**

**(iv)**

Figure 2

Europäisches
Patentamt

European
Patent Office

Office européen
des brevets

**EUROPEAN SEARCH REPORT**

Application Number

EP 17 38 2785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 40 37 831 A1 (SCHOEPFEL THEODOR [DE]) 4 June 1992 (1992-06-04) * claims * ----- | 1-15 | INV. C04B41/45 C04B41/52 |
| X | JP H05 238853 A (TOKYO ELECTRIC POWER CO; NGK INSULATORS LTD) 17 September 1993 (1993-09-17) * abstract * * tables * ----- | 1-15 | |

TECHNICAL FIELDS
SEARCHED       (IPC)

C04B

The present search report has been drawn up for all claims

| Place of search | Date of completion of the search | Examiner |
|---|---|---|
| Munich | 26 April 2018 | Rosenberger, Jürgen |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 17 38 2785

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2018

| Patent document cited in search report | | Publication date | Patent family member(s) | Publication date |
|---|---|---|---|---|
| DE 4037831 | A1 | 04-06-1992 | NONE | |
| JP H05238853 | A | 17-09-1993 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20010037019
- US 6678879 B
- US 6599461 B
- EP 3093279 A1
- WO 0047427 A
- EP 2944443 A
- EP 1878712 A
- EP 2889437 A1

**Non-patent literature cited in the description**

- **V. STENZEL ; N. REHFELD.** *Functional Coatings,* 2011
- **P. GLOCKNER ; T. JUNG ; S. STRUCK ; K. STUDER.** *Radiation Curing*